# EUROPEAN PATENT APPLICATION

(11) **EP 4 254 452 A1**
(43) Date of publication of application: **04.10.2023**
(21) Application number: 22165255.5
(22) Date of filing: 29.03.2022
(51) Int. Cl.: H01H 1/023

(54) **BRAZING METHOD, BRAZED JOINT, AND BRAZE**

(71) Applicant: ABB SCHWEIZ AG, 5400 Baden (CH)
(72) Inventor: KENEL, Christoph, 5400 Baden (CH); HOIDIS, Markus, 5443 Niederrohrdorf (CH)
(74) Representative: Maiwald GmbH

(57) **Abstract**

The invention provides a brazing method for providing a brazed joint. The method comprises directly brazing an AgC contact to a Cu carrier using an active braze.

## Description

### FIELD OF THE INVENTION

The invention pertains to a brazing method, a brazed joint, and a braze.

### BACKGROUND

Currently, when joining silver graphite-based contacts, referred to as AgC contacts hereinbelow, onto Cu carriers, this entails the formation of a Ag layer on the back side of the contact to ensure wetting by a braze. This layer is created by addition of Ag.

More specifically, conventional braze alloys, typically of the Cu-Ag-P family, wet only the metallic part of the contact, but do not form any bond with the contained carbon/graphite. Neither pure silver nor copper (and their binary alloys) wet graphite as there is no chemical reaction. This reduces the bonded area, leaving a joint that has both low strength and high electrical resistance. In practice, this issue is solved by joining a layer, also referred to as a backing layer, of Ag to the contact, e.g. by rolling or plating.

This adds cost due to additional processing steps during contact manufacturing and/or by adding an expensive material.

It is an object of the present invention to provide a method and a braze that allow for joining AgC contacts onto Cu carriers while alleviating at least some of the above disadvantages.

### SUMMARY

The object is achieved by the present invention. The invention provides a brazing method, a brazed joint, and a braze according to the independent claims. Preferred embodiments are laid down in the dependent claims.

The invention provides a brazing method for obtaining a brazed joint. The method comprises directly brazing an AgC contact to a Cu carrier using an active braze.

An advantage of such a method is that no additional processing steps like addition of a backing layer are required. Thus, manufacturing is simplified and costs are reduced. The method also allows for reducing the environmental footprint.

According to the present disclosure, the AgC contacts are directly brazed onto Cu carriers, e.g., without the production of a wetting backing layer. The present disclosure uses active brazing, which allows, in this specific context, for achieving wetting and bonding to the graphite part of the contact material.

Directly brazing an AgC contact to a Cu carrier, according to the present disclosure, may mean that, except for the braze, no material layers are added between the AgC contact and the Cu carrier. In particular, this precludes backing layers. Moreover, the method according to the present disclosure may entail that no decarburization is performed on the AgC contact material prior to brazing.

In the present disclosure, an AgC contact may be made from any AgC-based contact material, in particular AgC with and without additives. For example, an AgC contact may comprise at least Ag and C, and may optionally comprise one or more additives.

An active element may be an element that has high affinity to carbon, form carbides or dissolve the carbon and thus promote wetting. More details on active elements are provided below.

Brazed contacts of the present disclosure the present disclosure may be used as contacts for switchgear, e.g., contactors or breakers.

The active braze according to the present disclosure may be an alloy comprising one or more active elements, particularly active elements reacting with exposed carbon of the AgC contact, in particular, so as to form metal carbides and/or to dissolve the carbon.

Metal carbide layers may grow on the graphite and into the graphite. Thus, they adhere well and are also wetted by the metallic braze. This allows the metallic braze, particularly Cu-Ag-based active braze, to bond to a large area of the contact material.

According to the present disclosure, the one or more active elements comprise at least one of Ti, Hf, Zr, Cr, Si, and V.

Alternatively or in addition, according to the present disclosure, the one or more active elements may comprise an element having high affinity to carbon/graphite.

High affinity may refer to a negative heat of formation of the corresponding metal carbide. A more negative heat of formation indicates a higher affinity and ability to form the corresponding metal carbide. In particular, elements forming metal carbides with heat of formation more negative than -40 kcal/mol show highest affinity, however, elements with heat of formation as high as -5 kcal/mol may have sufficient affinity.

Alternatively or in addition, according to the present disclosure, the one or more active elements may comprise an element that promotes wetting of the contact by the active braze and/or bonding of the contact by the active braze, in particular, an element that allows for the braze to wet the graphite in the AgC contact.

The one or more active elements may comprise an element that forms a carbide or dissolves the carbon to form a metal carbon solid solution, particularly at brazing temperature. This allows wetting of the braze as the braze alloy now is not in contact to graphite/carbon directly but the reaction product of the active element and carbon/graphite.

Alternatively or in addition, according to the present disclosure, each of the one or more active elements may be added at equal to or less than 5 wt. %. In particular, the active braze may comprise exactly one active element and the active element may be added at equal to or less than 5 wt. %.

According to the present disclosure, the active braze may comprise at least one of Ag and Cu. These braze elements are compatible with AgC and Cu. This does not preclude addition of other compatible braze elements, e.g., Ni.

According to the present disclosure, the active braze may have a solidus of equal to or less than the melting point of Ag. For example, the solidus may be equal to or less than 962 °C.

The method of the present disclosure may comprise applying the active braze to the AgC contact and/or the Cu carrier in the form of powder and/or paste and/or foil. In particular, the method of the present disclosure may comprise placing the active braze, e.g., the paste, powder, or foil on the AgC contact or the Cu carrier and then sandwiching the braze between the AgC contact and the Cu carrier. It is to be understood that the applying step is performed prior to the application of heat for brazing.

The method of the present disclosure may comprise, in a processing step separate from the brazing, particularly prior to the brazing, producing a coated AgC contact, coated with the active braze such that the coated AgC contact is suitable for being stored and for being brazed at a later point in time by the application of heat. The coated AgC contact may be used as the AgC contact described throughout the present disclosure.

Alternatively or in addition, the method of the present disclosure may comprise in a processing step separate from, particularly prior to, the brazing, producing a coated Cu carrier coated with the active braze such that the coated Cu carrier is suitable for being stored and for being brazed at a later point in time by the application of heat. The coated Cu carrier may be used as the Cu carrier described throughout the present disclosure.

Using coated Cu carriers or AgC contacts may simplify subsequent processing steps and material handling.

According to the present disclosure, directly brazing the AgC contact to the Cu carrier may comprise performing heating, with the active braze interposed between the Cu carrier and the AgC contact and in contact with each of the Cu carrier and the AgC contact, in particular, wherein the heating comprises inductive heating and/or resistive heating and/or furnace heating.

According to the present disclosure, the brazing may be performed in an oxidizing atmosphere, for example air, or in a protective gas atmosphere, or in a vacuum.

For example, brazing may be performed in protective gas or vacuum to minimize the risk of oxidation, by resistive heating, or it can be performed by inductive heating in air. The speed of operation for inductive or resistive heating allows reaction between braze and contact before significant oxidation occurs. Accordingly, no protective atmosphere is required.

According to the present disclosure, the brazing may be performed over a heating time of equal to or less than 20 s, in particular equal to or less than 15 s, in particular equal to or less than 10 s, in particular equal to or less than 5 s, in particular a time of 3 s.

According to the present disclosure, the brazing may be performed at a temperature of equal to or less than 1000 °C and equal to or more than 500 °C, in particular, equal to or less than 1000 °C and equal to or more than 600 °C, in particular, equal to or less than 1000 °C and equal to or more than 700 °C, in particular, equal to or less than 1000 °C and equal to or more than 800 °C. As example, the brazing may be performed at a temperature of equal to or less than 962 °C and equal to or more than 640 °C.

An example for the method of the present disclosure comprises inductively brazing in air or in argon using an AgCuTi active braze in the form of a foil, for example by heating at a temperature between 818 °C and 962 °C for 12 s.

Another example for the method of the present disclosure comprises resistively brazing in air using an AgCuTi active braze in the form of a paste, for example by heating at a temperature between 818 °C and 962 °C for 3 s.

Another example for the method of the present disclosure comprises brazing in air using an AgCuCr active braze, for example by heating at a temperature between 818 °C and 962 °C for 3 s.

Another example for the method of the present disclosure comprises brazing with AgCuCr active braze at a maximum temperature of less than 962 °C for 12 s.

Another example for the method of the present disclosure comprises brazing with AgCuCr active braze in a vacuum furnace at 800-960 °C in 5-15 minutes.

The invention also provides an active braze configured to allow for directly brazing AgC contacts to a Cu carrier. In particular, the active braze of the invention may be configured for use in a method according to the present disclosure, particularly described above.

The active braze according to the present disclosure may be an alloy comprising one or more active elements, particularly reacting with exposed carbon of the AgC contact, in particular, so as to form metal carbides and/or to dissolve the carbon.

The one or more active elements may comprise at least one of Ti, Hf, Zr, Cr, Si, and V. Alternatively or in addition, the one or more active elements may comprise an element having high affinity to carbon/graphite. Alternatively or in addition one or more active elements comprise an element that promotes wetting of the contact by the active braze and/or bonding of the contact by the active braze, in particular, an element that allows for the braze to wet the graphite in the AgC contact.

Each of the one or more active elements may be added at equal to or less than 5 wt. %. In particular, the active braze may comprise exactly one active element and the active element may be added at equal to or less than 5 wt. %.

The active braze of the present disclosure may have a solidus of equal to or less than the melting point of Ag, in particular equal to or less than 962 °C. Alternatively or in addition, the active braze, in addition to the one or more active elements, may comprise at least one of Ag and Cu.

The invention also provides a brazed joint 1 having an AgC contact directly brazed to a Cu carrier by means of an active braze, particularly an active braze according to the present disclosure, e.g., as described or claimed. The brazed joint may be a brazed joint obtained by carrying out a method according to the present disclosure, particularly a method as described above or claimed.

The features and advantages outlined above in the context of the method similarly apply to the active brazes and the brazed joints described herein.

Further features, examples, and advantages will become apparent from the detailed description making reference to the accompanying drawings.

### BRIEF DESCRIPTION OF THE DRAWINGS

In the accompanying drawings,
Figure 1 illustrates schematically a brazed joint according to the present disclosure;
Figure 2 illustrates Ag5C directly brazed with Ag-35.25Cu-1.75Ti onto Cu carrier;
Figure 3 illustrates an elemental mapping of an induction brazed joint of Ag5C with Cu using Ag-35.25Cu-1.75Ti; and
Figure 4 illustrates schematically an AgC contact is joined to a Cu carrier via a backing layer as provided by the prior art.

### DETAILED DESCRIPTION

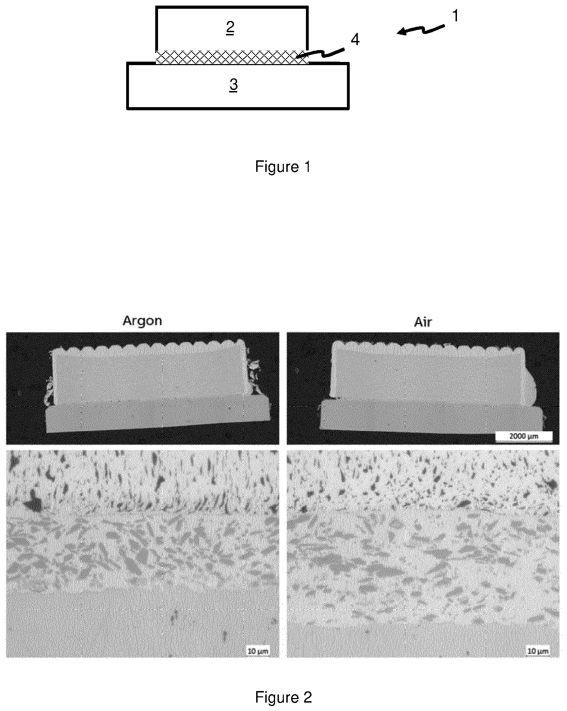

Figure 1 illustrates schematically a brazed joint 1 comprising an AgC contact 2 brazed directly to a Cu carrier 3 using an active braze 4 according to the present disclosure.

The active braze may comprise Ag and/or Cu and an active element selected among Ti, Hf, Zr, Cr, Si, and V. For example, the active braze may comprise an AgCu alloy comprising one or more of said elements, e.g., an AgCuTi or AcCuCr alloy. It is to be understood that additional elements may be comprised in said alloy, particularly additional active elements.

A brazing method according to the present disclosure comprises directly brazing an AgC contact 2 to a Cu carrier 3 using an active braze, for example the active braze described above, e.g., an AgCu alloy comprising an active element, e.g., Ti and/or Cr. Thus a brazed joint 1 according to the present disclosure can be obtained. Brazing may comprise performing a heating with the active brazed interposed between and in contact with each of the Cu carrier and the AgC contact, for example conductive, resistive, or furnace heating. The heating may be performed in air or a protective gas atmosphere. The method may comprise, prior to the brazing, placing the active braze in the form of a foil or a paste between the Cu carrier and the AgC braze or applying the active braze to the Cu carrier or the AgC contact by coating the Cu carrier or AgC contact with the active braze.

Figure 2 illustrates Ag5C directly brazed with Ag-35.25Cu-1.75Ti onto Cu carriers in argon and air. Both atmospheres lead to a good joint and wet the graphite in Ag5C. In this specific example, Ag5C contacts (5.5 x 7 mm) were inductively brazed to Cu using an Ag-35.25Cu-1.75Ti (wt.%) braze foil in air. The power level was 8.5 kW and brazing was conducted in 10 s.

The resulting joint shows no pores along the interface and show good bonding to the Ag5C if brazed under Ar or in air. The technique is thus suitable for fast active brazing even in oxidizing environment. This is markedly different from the typical use of active brazes, e.g. to braze ceramics in high vacuum furnaces.

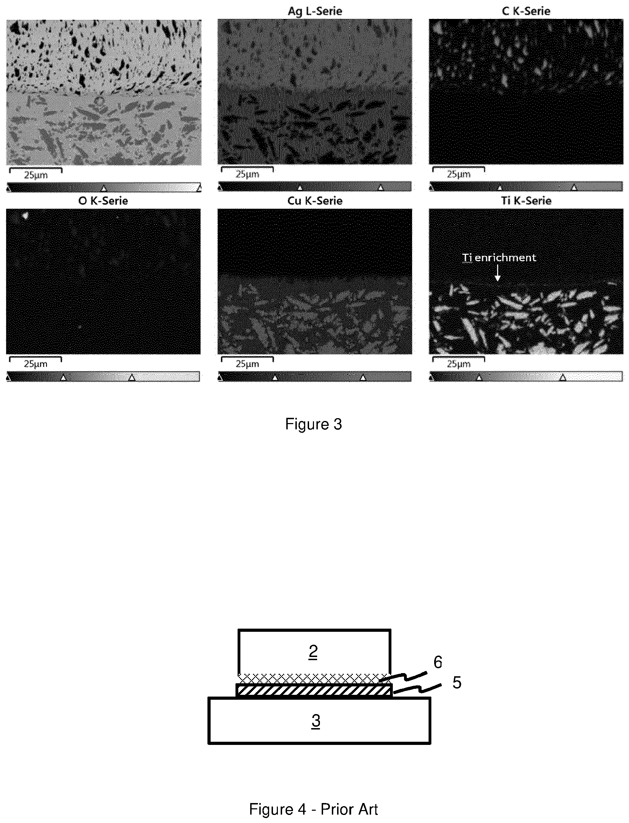

Figure 3 illustrates an elemental mapping of an induction brazed joint of Ag5C with Cu using Ag-35.25Cu-1.75Ti in air, performed by energy dispersive X-ray spectroscopy in an electron microscope. The mapping demonstrates the extent of Ag5C up to the brazed joint and enrichment of Ti in the interface zone. Remaining Ti in the braze forms Cu-Ti intermetallics throughout the joint. No extensive oxidation is observed within the braze joint.

This demonstrates that indeed a direct brazing of AgC contacs to a Cu carrier using an active braze according to the present disclosure yields high-quality joints.

Further examples for a brazing method of the present disclosure are provided below.
- Example 1: AgC inductively brazed in air with Ag - 35.25 Cu - 1.75 Ti foil (commercially available) in 12 s at a temperature of between 818 °C and 962 °C.
- Example 2: AgC inductively brazed in argon with Ag - 35.25 Cu - 1.75 Ti foil (commercially available) in 12 s at a temperature of between 818 °C and 962 °C.
- Example 3: AgC resistively brazed in air with Ag - 35.25 Cu - 1.75 Ti paste (commercially available) in 3 s at a temperature between 818 °C and 962 °C.
- Example 4: AgC inductively brazed with Ag - (20 to 80) Cu - <5 Cr in 12 s at a maximum temperature of less than 962 °C.
- Example 5: AgC brazed in a vacuum furnace at 800-960 °C in 5-15 minutes with a Cu - (20 to 80) Ag - <2 Cr braze.

As can be seen from the above, the present disclosure provides a new joining concept that directly brazes AgC contacts, e.g., for breakers, onto Cu carriers with an active braze. The active braze may contain Ti, Hf, Zr, Cr, Si and/or V reacting with the typically non-wetting graphite (C) in the AgC contact's material, thereby ensuring wettability and good bonding without the need for a Ag backing layer. This allows for reducing environmental footprint and cost.

The AgC contacts are directly brazed onto Cu carriers, e.g., without the production of a wetting backing layer through deoxidation or plating on the contacts.

The braze according to the present disclosure may contain one or several of Ti, Hf, Zr, Cr, Si and/or V as active elements with the remainder of the braze may be one or several of Ag, Cu and Ni. The braze may be applied in the form of powder, paste or foil. The braze may be placed onto the contacts or carriers in a previous step or applied immediately prior to brazing. Brazing may be performed in protective gas, vacuum or air with heat provided through resistive or inductive heating or in a furnace.

The present disclosure uses active brazing to achieve wetting and bonding to the graphite part of the contact material. Active brazing may be achieved by addition of an active element, or a mixture of several, to the alloy.

As an example, an element may be added to the braze alloy, typically in amounts <5 wt.%, that shows high affinity to carbon/graphite. Suitable elements include Ti, Zr, Hf, Cr, Si and V that all form stable metal carbides. These elements, if added to a braze alloy, react with the exposed carbon from the contact material, thereby locally forming metal carbides. These layers grow on the graphite and into the graphite. Thus they adhere well, but are also wetted by the metallic braze. This allows the metallic braze, typically Cu-Ag-based, to bond to a large area of the contact material.

The approach of the present disclosure is compatible with different ways of brazing. The braze can be applied, as foil, powder or paste. The braze can be placed in-between contact and carrier immediately prior to brazing, or be added to either, contact or carrier, in a previous operation. The latter simplifies later/subsequent processing steps and material handling. Brazing can be performed in protective gas or vacuum to minimize the risk of oxidation, by resistive or inductive heating, or it can be performed by resistive or inductive heating in air. The speed of operation for inductive heating allows reaction between braze and contact before significant oxidation occurs.

Figure 4 illustrates schematically an AgC contact 2 is joined to a Cu carrier 3 via a backing layer 6 and a braze 5 as provided by the prior art.

While the invention has been illustrated and described in detail in the drawings and foregoing description, such illustration and description are to be considered exemplary and not restrictive. The invention is not limited to the disclosed embodiments. In view of the foregoing description and drawings it will be evident to a person skilled in the art that various modifications may be made within the scope of the invention, as defined by the claims.

## Claims

1. A brazing method for obtaining a brazed joint (1), the method comprising directly brazing an AgC contact (2) to a Cu carrier (3) using an active braze (4).

2. The method of claim 1, wherein the active braze (4) is an alloy comprising one or more active elements, particularly active elements reacting with exposed carbon of the AgC contact, in particular, so as to form metal carbides and/or to dissolve the carbon.

3. The method of claim 2, wherein the one or more active elements comprise at least one of Ti, Hf, Zr, Cr, Si, and V.

4. The method of claim 2 or claim 3, wherein the one or more active elements comprise an element having high affinity to carbon/graphite.

5. The method of any of claims 2 to 4, wherein the one or more active elements comprise an element that promotes wetting of the contact by the active braze and/or bonding of the contact by the active braze, in particular, an element that allows for the braze to wet the graphite in the AgC contact.

6. The method of any of claims 2 to 5, wherein each of the one or more active elements are added at equal to or less than 5 wt. %, in particular, wherein the active braze comprises exactly one active element and the active element is added at equal to or less than 5 wt. %.

7. The method of any of claims 2 to 6, wherein the active braze (4) comprises at least one of Ag and Cu.

8. The method of any of the preceding claims, wherein the active braze (4) has a solidus of equal to or less than the melting point of Ag.

9. The method of any of the preceding claims, the method comprising applying the active braze (4) to the AgC contact (2) and/or the Cu carrier (3) in the form of powder and/or paste and/or foil.

10. The method of any of claims 1 to 8, the method further comprising,
in a processing step separate from the brazing, producing a coated AgC contact, coated with the active braze (4) such that the coated AgC contact is suitable for being stored and for being brazed at a later point in time by the application of heat, and, in particular, using the coated AgC contact as the AgC contact (2), and/or
in a processing step separate from the brazing, producing a coated Cu carrier coated with the active braze (4) such that the coated Cu carrier is suitable for being stored and for being brazed at a later point in time by the application of heat, and, in particular, using the coated Cu carrier as the Cu carrier (3).

11. The method of any of the preceding claims, wherein directly brazing the AgC contact (2) to the Cu carrier (3) comprises performing heating, with the active braze (4) interposed between the Cu carrier (3) and the AgC contact (2) and in contact with each of the Cu carrier (3) and the AgC contact (2), in particular, wherein the heating comprises inductive heating and/or resistive heating and/or furnace heating.

12. The method of any of the preceding claims,
wherein the brazing is performed in an oxidizing atmosphere, for example air, or in a protective gas atmosphere, or in a vacuum, and/or
wherein the brazing is performed over a time of equal to or less than 20 s, in particular equal to or less than 15 s, in particular equal to or less than 10 s, in particular equal to or less than 5 s, in particular a time of 3 s, and/or
wherein the brazing is performed at a temperature of equal to or less than 1000 °C and equal to or more than 500 °C, in particular, equal to or less than 1000 °C and equal to or more than 600 °C, in particular, equal to or less than 1000 °C and equal to or more than 700 °C, in particular, equal to or less than 1000 °C and equal to or more than 800 °C.

13. An active braze (4) configured to allow for directly brazing AgC contacts (2) to a Cu carrier (3), in particular, configured for use in a method according to any of the preceding claims.

14. The braze of claim 13,
wherein the active braze is an alloy comprising one or more active elements, particularly reacting with exposed carbon of the AgC contact, in particular, so as to form metal carbides and/or to dissolve the carbon, and/or
wherein the one or more active elements comprise at least one of Ti, Hf, Zr, Cr, Si, and V, and/or
wherein the one or more active elements comprise an element having high affinity to carbon/graphite, and/or
wherein one or more active elements comprise an element that promotes wetting of the contact by the active braze and/or bonding of the contact by the active braze, in particular, an element that allows for the braze to wet the graphite in the AgC contact, and/or
wherein each of the one or more active elements is added at equal to or less than 5 wt. %, in particular, wherein the active braze comprises exactly one active element and the active element is added at equal to or less than 5 wt. %, and/or
wherein the active braze has a solidus of equal to or less than the melting point of Ag, in particular equal to or less than 962 °C, and/or
wherein the active braze, in addition to the one or more active elements, comprises at least one of Ag and Cu.

15. A brazed joint (1) having an AgC contact (2) directly brazed to a Cu carrier (3) by means of an active braze (4), particularly an active braze (4) according claims 13 or 14, in particular, a brazed joint (1) obtained by carrying out the method of any one of claims 1 to 12.
